Europäisches Patentamt

(19) European Patent Office

Office européen des brevets

(11) Publication number: **0 078 274**

**B1**

(12) **EUROPEAN PATENT SPECIFICATION**

(45) Date of publication of patent specification: **24.09.86**

(51) Int. Cl.⁴: **F 16 K 5/06,** F 16 K 5/08, F 16 K 41/00

(21) Application number: **82901343.2**

(22) Date of filing: **07.05.82**

(86) International application number:
**PCT/AU82/00069**

(87) International publication number:
**WO 82/03898 11.11.82 Gazette 82/27**

(54) **FIRE SAFE VALVE.**

(30) Priority: **07.05.81 AU 8759/81**

(43) Date of publication of application:
**11.05.83 Bulletin 83/19**

(45) Publication of the grant of the patent:
**24.09.86 Bulletin 86/39**

(84) Designated Contracting States:
**DE FR GB NL**

(56) References cited:
**EP-A-0 004 428**
**EP-A-0 005 584**
**AU-B- 291 490**
**AU-B- 439 927**
**GB-A-1 415 562**
**GB-A-1 515 363**
**US-A-1 778 746**
**US-A-3 273 902**
**US-A-3 778 029**
**US-A-3 888 460**
**US-A-4 235 418**

(73) Proprietor: **B.C. RICHARDS & CO. PTY. LTD.**
**288 Bilsen Road**
**Geebung, Qld 4034 (AU)**

(72) Inventor: **RICHARDS, Cecil Graham**
**246 Maundrell Terrace**
**Aspley, Qld. 4034 (US)**

(74) Representative: **Prüfer, Lutz H., Dipl.-Phys.**
**Harthauser Strasse 25d**
**D-8000 München 90 (DE)**

Courier Press, Leamington Spa, England.

## Description

This invention relates to sealing means according to the preamble of claim 1. A sealing means of this kind is known from the EP—A—0 004 428. The sealing member shown therein comprises an O-ring of substantially circular cross-section having a slit facing the pressure side. The O-ring is placed in a groove of substantially rectangular cross-section. Hence, this O-ring must be of strong design in order to prevent deformation in operation, this design resulting in high frictional forces between the sealed surfaces. Hence, this kind of sealing means is practically only usable for sealing parts which are not to be moved in operation.

GB—A—1 515 363 discloses a sealing means for ball valves, wherein the sealing member is received in a steplike groove in the first part and has a leg contacting the ball. The leg is reinforced against deformation by a spring.

It is the object of the invention to provide an effective sealing means for parts which are moved relative to each other in operation. In particular an effective sealing means for both the valve stem and the valve seat of a soft-seated ball valve shall be provided which permits compliance with the requirements of BS 5146: 1974.

According to the invention, this object is achieved by a sealing means which is characterized by the features included in the characterizing part of claim 1. According to a further embodiment of the invention, the inventive solution is characterized by the features of the characterizing part of claim 4.

Preferably said sealing member comprises a thin metallic member.

Preferably said sealing means comprises a seal for a ball valve, said member being adapted for support on one side of a backing ring for a resilient sealing ring, whereby in use, portion of said cross-sectionally curved member is adapted to slidingly engage the bore of the valve and under the influence of fluid pressure on one side of said member, effects a substantially fluid tight seal between said backing ring and said valve bore.

Preferably said sealing means comprises a substantially "U"-shaped channel section member adapted for effecting a substantially fluid tight seal between a valve stem and a valve body.

In a second aspect of the invention, there is provided a valve fitted with at least one seal as hereinbefore described.

Alternative embodiments of the invention will now be described with reference to the accompanying drawings in which:

FIG. 1 illustrates a section of a trunnion mounted ball valve of the type constructed in accordance with British Standard No. BS 5351: 1976 in which the sealing means according to the invention is associated with the backing ring for a resilient ball sealing ring.

FIG. 2 illustrates an alternative embodiment of the sealing means shown in FIG. 1.

FIGS. 3 and 4 illustrate respectively the sealing means of FIGS. 1 and 2 in association with backing rings of the "grease-filled type".

FIG. 5 illustrates the application of a sealing means according to the invention to the joint between the valve stem or spindle and the upper part of the valve body.

FIG. 6 illustrates a modified form of the sealing means shown in FIG. 5.

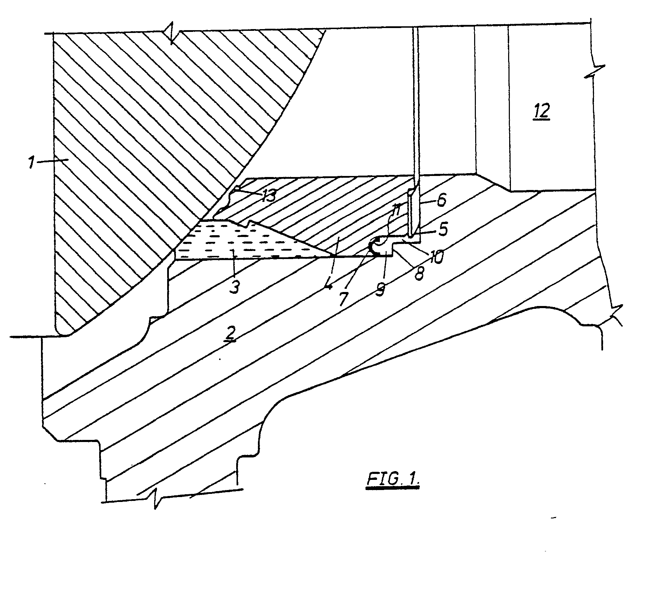

In FIG. 1, a ball 1 adapted to be mounted on a lower trunnion (not shown) is situated within a valve housing 2. A resilient sealing ring 3 such as PTFE of the kind described in Australian Patent Nos. 291,490 and 439,927 may be mounted in sealing engagement with ball 1 between housing 2 and a rigid backing ring 4.

Sealing ring 3 is biased axially inwardly towards ball 1 by a spring member 5 mounted between the backing ring 4 and an abutment 6 in the valve housing. At the radially outer perimeter of abutment 6 is formed a peripheral step 8 facing axially inwardly of the valve housing. A hollow curved step 7 of slightly larger radial dimension is formed in the adjacent portion of backing ring 4 to define a hollow aperture 9 between the steps 7 and 8 and a further aperture 10 between the axial lands adjacent the steps.

Situated within the hollow of step 7 and supported at least partially thereby is mounted a metallic ring 11 of essentially "U"-shaped cross-section.

The metallic ring 11 may be suitably pressed or otherwise formed from a metal such as stainless steel, Monel etc. or preferably from Inconel which can be heat treated to retain spring characteristics at high operating temperatures. The thickness of metal forming the ring 11 and the dimensions of the "U"-shaped channel section are chosen to permit a press fit between backing ring 4 and valve housing 2 sufficient to maintain frictional engagement between adjacent surfaces by radially directed forces exerted by the legs of the "U"-shaped channel section. The frictional engagement between adjacent surfaces is not so strong however as to prevent axial sliding movement of ring 11 under normal conditions of fluid pressure variations. The shape of hollow curved step 7 is chosen to correspond with the radiussed portion of the channel sectioned ring 11 to support the central body portion of the ring under conditions of fluid pressure and to allow the legs of the channel section to be compressed radially against the adjacent surfaces.

Under normal operating conditions with the valve under fluid pressure from an upstream region 12, fluid seeking a pathway between the backing ring 4 and the valve housing encounters ring 11, which under fluid pressure, expands radially with a force proportional to the fluid pressure to enhance the seal between backing ring 4 and the valve housing 2. The length of the opposing essentially parallel legs of the "U"-shaped cross-section of ring 11 are chosen to permit smooth sliding travel within aperture 9 to prevent "cocking" of ring 11 with the possibility of reduced fluid seal.

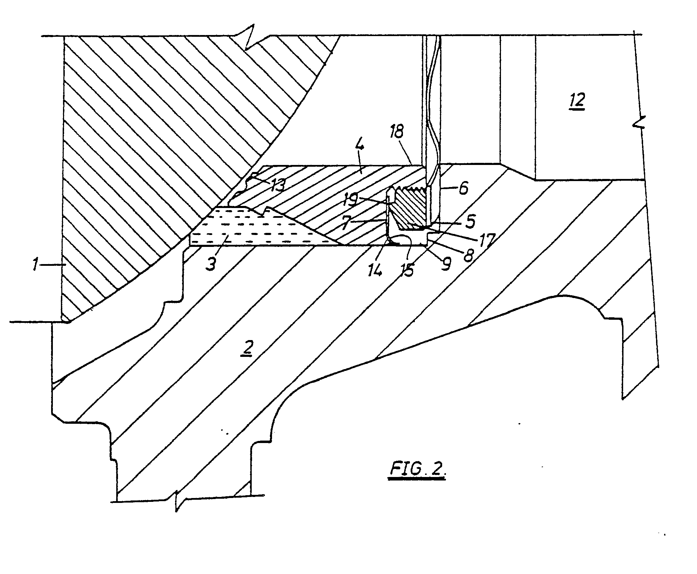

FIG. 2 illustrates an alternative embodiment of the invention. Backing ring 4 is formed with a fairly large step 7 comprising an essentially upright wall with a rearwardly curved portion 14 adjacent its outer peripheral edge. The sealing means 15 comprises a thin metal annulus with a curved flange about its outer periphery, the radius of curvature corresponding essentially with that of rearwardly curved portion 14 of backing ring 4. The outermost portion of the curved flange frictionally engages the surface of the bore 16 in valve housing 2 such that under conditions of fluid pressure from upstream region 12, the outermost portion of the curved flange is forced against the surface of a bore 16 to effect an essentially fluid tight seal, the remainder of sealing means 15 being supported against deformation by backing ring 4.

Sealing means 15 is securably retained in position on step 7 of backing ring 4 by a retaining ring 17 which screw threadably engages lip 18 of backing ring 4. A ridge 19 or like protrusion is provided on retaining ring 17 as a means of concentrating pressure on sealing means 15 to prevent leakage of fluid between sealing means 15 and the face of step 7.

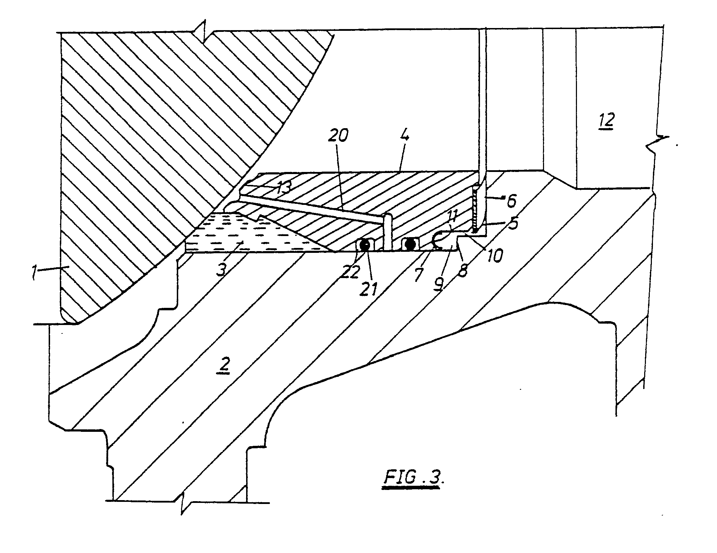

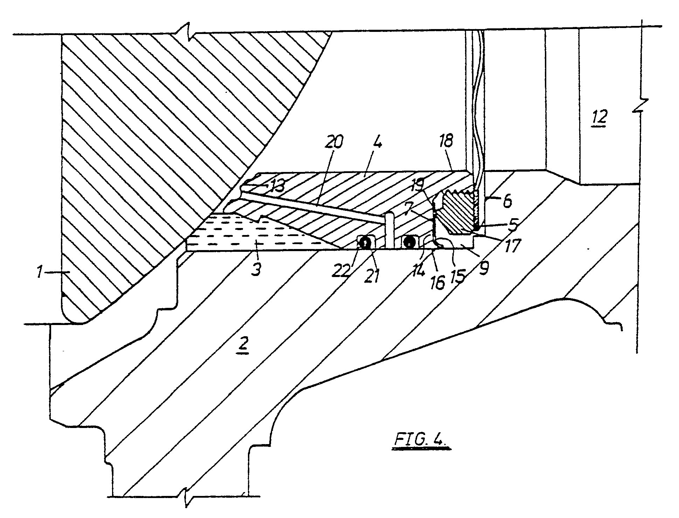

FIGS. 3 and 4 illustrate respectively modifications of the sealing assemblies of FIGS. 1 and 2. In each of FIGS. 3 and 4, backing ring 4 includes a channel 20 communicating between a grease inlet port (not shown) in the valve body 2 and the recess adjacent sealing lip 13 on backing ring 4. In the event of undue wear on the resilient seal 3 or sealing lip 13, a suitable grease or the like compound may be pumped into the sealing assembly to provide an emergency or temporary seal between ball and backing ring 4. Additional flexible rubber or PTFE sealing rings 21 may be provided in channels 22 in backing ring 4 to enhance the overall sealing properties of the sealing assembly.

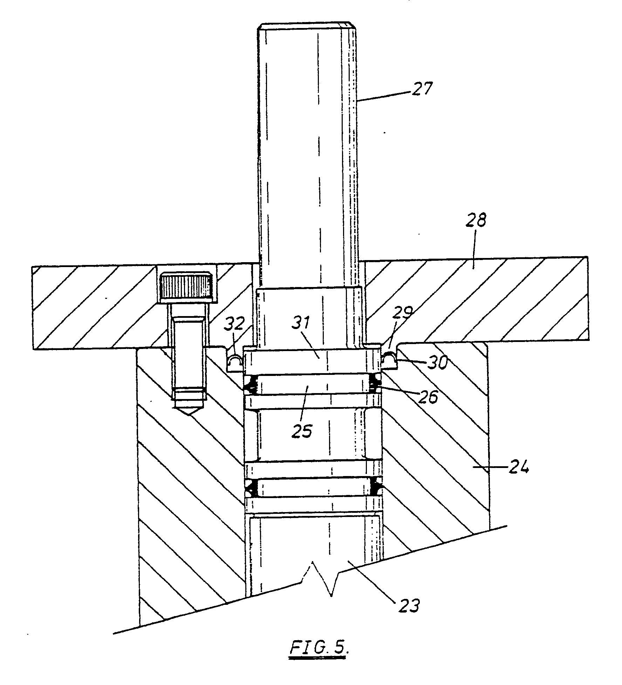

FIG. 5 illustrates one embodiment of a sealing means according to the invention positioned within the neck of a valve to provide effective sealing between the valve neck and the valve stem or spindle. The portion of the valve illustrated comprises a valve stem 23 within the bore of the neck 24 of a valve housing. The stem is provided with grooved channels 25 which accommodate primary seals 26 to prevent leakage of fluid under pressure between the bore of the neck and the valve stem. The upper portion 27 of the valve stem is adapted to receive a valve actuating handle (not shown). A cap 28 is bolted or otherwise suitably affixed to the valve neck 24 to retain the valve stem within the valve. The cap 28 is formed with a depending flange 29 which frictionally engages on one side with an aperture 30 in the valve neck and on its other side with upper flange 31 of the valve stem. The downwardly extending face of flange 29 is formed with a radiussed recess to receive and support a channel sectioned sealing means 32. The operation of sealing means 32 to prevent fluid leakage is similar to that of sealing means 11 described with reference to FIG. 1 except that the moving frictional engagement between sealing means 32 and valve stem 23 is rotational rather than axial.

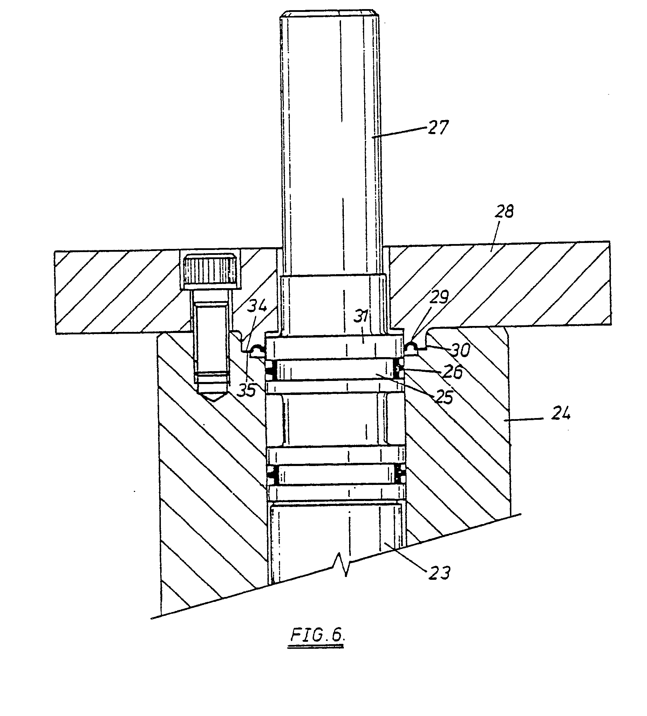

FIG. 6 illustrates a modified form of the arrangement illustrated in FIG. 5.

The sealing means 32 is formed with an essentially flat outer peripheral flange 33 which may be compressed between faces 34 and 35 of the cap 28 and valve neck 24 respectively. Compression of flange 33 by means of the cap retaining bolts ensures an effective fluid tight seal along the pathway defined by the join between adjacent surfaces of cap 28 and valve neck 24.

When soft seated ball valves, particularly of the trunnion mounted type incorporating the channel-section member of the invention are subjected to the fire safe testing procedure as set forth in BS 5146: 1974, it is found that the maximum permitted leakage rate of 0.4 ml/min per millimetre diameter is easily met with little or no leakage at all.

The various embodiments of the invention described are particularly suitable for trunnion mounted ball valves wherein under fire conditions the soft seal may decompose leaving a primary metal to metal seal between the sealing lip 13 of backing ring 4 and the ball under the action spring biassing means 5 and a secondary seal between backing ring 4 and valve housing 2. The embodiment described not only provides a most efficient secondary seal but also provides an improved primary seal due to the additional forces exerted on step 7 by seal 11.

The present invention also contemplates the use of a channel-sectioned member as hereinbefore described in seal mounted ball valves and other types of valves e.g. gate valves.

In a further embodiment of the invention two curved section members may be provided in the aperture between the backing ring 4 (or like member in other valves) and the valve housing or between the valve neck and valve stem. Such members may be positioned with their concave faces facing in the same direction or opposing. In a valve wherein the curved section members are arranged with opposing openings, it is envisaged that such an arrangement would comprise an effective seal between surfaces regardless of direction of fluid pressure. Where more than one curved section member is employed they may be arranged in the aperture independently or they may be connected by a separating means.

In other embodiments of the invention the sealing means may be coated with a relatively soft metal such as silver, brass, bronze or like metals to permit after a short period of use, a bedding of the slidably engaging surfaces between the sealing means and the valve housing or the valve stem. In this manner, not only can slight imperfections within normal machining tolerances be compensated for to improve the quality of the fluid seal between the relevant surfaces, but sliding friction between the sealing means and adjacent surfaces can be improved.

## Claims

1. Sealing means for sealing against a fluid pressure by forming a substantially fluid tight seal between a first part (2) having a sealing surface and a second part (4) having a step (7) facing the pressure to be sealed against, comprising a sealing member having a body portion adjacent said step and a curved flange extending from the edge of the body portion at the side of the sealing surface and frictionally engaging said sealing surface, characterized in that the step (7) has a curved portion (14) adjacent its outer edge and the flange is curved such that the radius of curvature corresponds essentially with that of the curved portion (14) and the outermost portion of the curved flange engages the sealing surface, whereby the outermost portion of the flange is forced against the sealing surface under the effect of the pressure and the remainder of the sealing member (11, 15, 32) is supported against deformation by the step (7) and the curved portion (14).

2. A sealing means according to claim 1, characterized in that the sealing member (11, 32) comprises a radiussed U-shaped channel section.

3. A sealing means according to claim 2, characterized in that the U-shaped channel section comprises two opposing essentially parallel legs.

4. A sealing means for sealing against a fluid pressure by forming a substantially fluid-tight seal between a first part (2) having a sealing surface and a second part (4) having a step (7) facing the pressure to be sealed against, comprising a sealing member (15) having a body portion adjacent said step and a curved flange extending from the edge of the body portion at the side of the sealing surface and frictionally engaging said sealing surface, characterized in that the step (7) has a curved portion (14) adjacent its outer edge and the flange is curved such that the radius of curvature corresponds essentially with that of the portion (14) and the outermost portion of the curved flange engages the sealing surface, a retaining ring (17) being mounted on the second part (4) in a manner to engage the body portion of the sealing member (15) and press the body portion into engagement with the step (7).

5. A sealing means according to claim 4, characterized in that the retaining ring (17) is provided with a protrusion (19) at the side thereof facing the sealing member (15).

6. A sealing means according to any preceding claim, wherein the sealing member comprises a seal for a ball valve, characterized in that the step (7) is formed in a backing ring (4) for a resilient sealing ring (3), whereby, in use, the outermost portion of the flange of the sealing member is adapted to slidingly engage the bore of the valve.

7. A ball valve comprising a body seal as claimed in any preceding claim.

8. A fluid valve comprising a stem seal as claimed in any of the claims 1 to 6.

## Patentansprüche

1. Abdichteinrichtung zum Abdichten gegen einen Fluiddruck durch Bilden einer im wesentlichen fluiddichten Abdichtung zwischen einem ersten Teil (2) mit einer dichtenden Oberfläche und einem zweiten Teil (4) mit einer dem Druck, gegen den abgedichtet werden soll, zugewandten Stufe (7), wobei die Abdichteinrichtung versehen ist mit einem Dichtungteil mit einem an die Stufe angrenzenden Körperbereich und einem sich von dem Ende des Körperbereiches auf der Seite der dichtenden Oberfläche erstreckenden und reibungsmäßig an die dichtende Oberfläche angreifenden gebogenen Rand, dadurch gekennzeichnet, daß die Stufe (7) an ihr äußeres Ende angrenzend einen gebogenen Bereich (14) hat und der Rand so gebogen ist, daß der Biegungsradius im wesentlichen dem des gebogenen Bereiches (14) entspricht und der äußere Bereich des gebogenen Randes an die dichtende Oberfläche angreift, wodurch der äußerste Bereich des Randes dem Einfluß des Druckes gegen die dichtende Oberfläche gezwungen wird und der Rest des Dichtungsteiles (11, 15, 32) gegen Deformation durch die Stufe (7) und den gebogenen Bereich (14) gestützt wird.

2. Abdichteinrichtung nach Anspruch 1, dadurch gekennzeichnet, daß das Dichtungsteil (11, 32,) einen in radialer Richtung U-förmigen Kanalbereich aufweist.

3. Abdichteinrichtung nach Anspruch 2, dadurch gekennzeichnet, daß der U-förmige Kanalbereich zwei sich gegenüberstehende, im wesentlichen parallele Arme aufweist.

4. Abdichteinrichtung zum Abdichten gegen einen Fluiddruck durch Bilden einer im wesentlichen fluiddichten Abdichtung zwischen einem ersten Teil (2) mit einer dichtenden Oberfläche und einem zweiten Teil (4) mit einer dem Druck, gegen den abgedichtet werden soll, zugewandten Stufe (7), wobei die Abdichteinrichtung versehen ist mit einem Dichtungsteil (15) mit einem an die Stufe angrenzenden Körperbereich und einem sich von dem Ende des Körperbereiches auf der Seite der dichtenden Oberfläche erstreckenden und reibungsmäßig an die dichtende Oberfläche angreifenden gebogenen Rand, dadurch gekennzeichnet, daß die Stufe (7) an ihr äußeres Ende angrenzend einen gebogenen Bereich (14) hat, und der Rand so gebogen ist, daß der Biegungsradius im wesentlichen dem des Bereiches (14) entspricht, und der äußerste Bereich des gebogenen Randes an die dichtende Oberfläche angreift, wobei ein Rückhaltering (17) auf dem zweiten Teil (4) auf eine derartige Weise angebracht ist, daß er den Körperbereich des Dichtungsteiles (15) angreift und den Körperbereich in Eingriff mit der Stufe (7) drückt.

5. Abdichteinrichtung nach Anspruch 4, dadurch gekennzeichnet, daß der Rückhaltering (17) mit einem dem Dichtungsteil (15) zugewandten Vorsprung (19) an seiner Seite versehen ist.

6. Abdichteinrichtung nach einem der vorhergehenden Ansprüche, in dem das Dichtungsteil eine Dichtung für ein Kugelventil aufweist, dadurch gekennzeichnet, daß die Stufe (7) in einem gegendrückenden Ring (4) für einen federnden Dichtungsring (3) gebildet ist, wodurch im Gebrauch der äußerste Bereich des Randes des Dichtungsteiles geeignet ist, verschiebbar an die Bohrung des Ventiles anzugreifen.

7. Kugelventil, welches eine Körperdichtung nach einem der vorhergehenden Ansprüche aufweist.

8. Fluidventil, welches ein Stößelventil nach einem der Ansprüche 1 bis 6 aufweist.

**Revendications**

1. Dispositif de garniture d'étanchéité à tenir une pression hydrostatique, formant un joint essentiellement étanche contre une liquide ou gaz entre une première partie (2) ayant une surface de joint, et une deuxième partie (4) pourvue d'un décrochement (7) tourné vers la direction d'origine de la pression, ledit dispositif comprenant un élément d'étanchéité ayant un corps contigu audit décrochement, et un collet courbé s'étendant du bord dudit corps au côté de ladite surface de joint pour un contact à friction à ladite surface de joint, caractérisé en ce que ledit décrochement (7) est pourvu d'une partie courbée (14) contiguë à son bord extérieur, et que ledit collet est tellement courbé que le rayon de courbure soit essentiellement conforme au rayon de la partie intérieure (14) et que la partie la plus extérieure dudit bord courbé entre en contact avec ladite surface de joint, ladite partie la plus extérieure dudit bord étant serrée contre ladite surface de joint sous l'action de la pression et le reste dudit élément d'étanchéité (11, 15, 32) étant appuyé par ledit décrochement (7) et ladite partie courbée (14) afin d'empêcher une déformation.

2. Dispositif de garniture selon la revendication 1, caractérisé en ce que ledit membre d'étanchéité (11, 32) comprend une partie de gorge en U à rayon.

3. Dispositif de garniture selon la revendication 2, caractérisé en ce que ladite partie de gorge en U comprend deux bras opposés et parallèls essentiellement.

4. Dispositif de garniture d'étanchéité à tenir une pression hydrostatique, formant un joint essentiellement étanche contre une liquide ou gaz entre une première partie (2) ayant une surface de joint, et une deuxième partie (4) pourvue d'un décrochement (7) tourné vers la direction d'origine de la pression, ledit dispositif comprenant un élément d'étanchéité (15) ayant un corps contigu audit décrochement, et un collet courbé s'étendant du bord dudit corps au côté de ladite surface de joint pour un contact à friction à ladite surface de joint, caractérisé en ce que ledit décrochement (7) est pourvu d'une partie courbée (14) contiguë à son bord extérieur, et que ledit collet est tellement courbé que le rayon de courbure soit essentiellement conforme au rayon de la partie intérieure (14) et que la partie la plus extérieure dudit bord courbé entre en contact avec ladite surface de joint, un bague de support (17) étant monté sur ladite deuxième partie (4) de telle façon qu'il entre en contact avec le corps didit élément d'étanchéité (15) et serre ledit corps en contact avec ledit décrochement (7).

5. Dispositif de garniture selon la revendication 4, caractérisé en ce que ledit bague de support (17) est pourvu d'une saillie (19) latérale tournée vers ledit élément d'étanchéité.

6. Dispositif de garniture selon quelconque des revendications 1 à 5, ledit élément d'étanchéité comprenant un joint pour une soupape à bille, caractérisé en ce que ledit décrochement (7) est formé dans un bague d'appui (4) pour un bague d'étanchéité élastique (3), ladite partie la plus extérieure du bord dudit élément d'étanchéité étant adapté, en opération, pour entre en contact à coulissement avec l'alésage de ladite soupape.

7. Soupape à bille comprenant une garniture de corps selon quelconque des revendications précédentes.

8. Soupape étanche aux liquides, comprenant une garniture de tige selon quelconque des revendications 1 à 6.

FIG. 1.

FIG. 2.

_FIG .3._

FIG. 4.

4

0 078 274

*FIG. 5.*

FIG.6.